# EUROPÄISCHE PATENTSCHRIFT

(11) **EP 1 091 823 B1**
(45) Veröffentlichungstag und Bekanntmachung des Hinweises auf die Patenterteilung: **05.03.2003**
(21) Anmeldenummer: 99941392.5
(22) Anmeldetag: 25.06.1999
(51) Int. Cl.: B23K 9/10

(54) **BOLZENSCHWEISSEINRICHTUNG**
STUD WELDING DEVICE
DISPOSITIF DE SOUDAGE DE GOUJONS

(30) Priorität: 29.06.1998 DE 19828986
(43) Veröffentlichungstag der Anmeldung: 18.04.2001
(73) Patentinhaber: Nelson Bolzenschweiss-Technik GmbH & Co. KG, 58285 Gevelsberg (DE)
(72) Erfinder: CITRICH, Ulrich, D-58285 Gevelsberg (DE); EBERT, Wolfgang, Westlake, OH 44145 (US); MADSAK, Jürgen, D-58339 Breckerfeld (DE)
(74) Vertreter: Eder, Christian, Dipl.-Ing.
(86) Internationale Anmeldenummer: DE9901865
(87) Internationale Veröffentlichungsnummer: WO00000319

(56) Entgegenhaltungen:
- WO-A-91/01843
- US-A- 4 804 811

## Beschreibung

Die Erfindung betrifft eine Bolzenschweißeinrichtung für das Bolzenschweißen, welche sich insbesondere für den Einsatz mit von Schweißrobotern gesteuerten Schweißköpfen eignet.

Bekannte Bolzenschweißeinrichtungen sind in der Regel so ausgebildet, dass eine Schweißpistole oder ein Schweißkopf mit dem eigentlichen Schweißgerät verbunden werden muss. Die Verbindung erfolgt zumindest über eine Schweißleitung, welche den Schweißstrom vom Bolzenschweißgerät an die Schweißpistole bzw. den Schweißkopf leitet. Zusätzlich kann selbstverständlich die Schweißpistole bzw. der Schweißkopf so mit dem Bolzenschweißgerät verbunden sein, dass bestimmte Sensor- bzw. Aktorsignale zwischen dem Bolzenschweißgerät und der Schweißpistole bzw. dem Schweißkopf übertragen werden können. Beispielsweise kann hierbei das Signal zur Steuerung der Pinolenbewegung an die Schweißpistole bzw. den Schweißkopf übertragen werden. Der zeitliche Verlauf des Schweißstroms wird bei diesen bekannten Bolzenschweißgeräten durch eine entsprechende Ansteuerung eines Schweißgenerators, beispielsweise eines Schweißtrafos, gesteuert. Das Schweißgerät weist zur Durchschaltung des Schweißstroms auf die Schweißleitung und damit zur Schweißpistole bzw. zum Schweißkopf zumindest einen steuerbaren Schalter, beispielsweise in Form eines Thyristors auf. Die Ansteuerung des Thyristors erfolgt so, dass die vorbestimmte Schweißzeit eingehalten wird.

Des Weiteren sind Bolzenschweißgeräte mit mehreren Schweißausgängen bekannt, wobei an jeden Schweißausgang eine Bolzenschweißpistole bzw. ein Bolzenschweißkopf anschließbar ist. Für jeden Schweißausgang sind im Bolzenschweißgerät ein oder mehrere steuerbare elektronische Schalter vorgesehen. Beispielsweise ist aus der EP 0 437 573 B1 ein Bolzenschweißgerät mit mehreren Schweißausgängen für Schweißpistolen mit verschiedener Polarität für unterschiedliche Schweißaufgaben bekannt, bei dem jeder Schweißausgang so gestaltet ist, dass eine Umkehrung der Polarität erfolgen kann.

Nachteilig bei all diesen bekannten Schweißgeräten ist jedoch, dass bereits im Schweißgerät bzw. durch den Aufbau des Schweißgeräts festgelegt ist, welche Schweißaufgaben mit einer an das Schweißgerät angeschlossenen Schweißpistole bzw. einem daran angeschlossenen Schweißkopf bewältigbar sind. Des Weiteren ist durch die vorgegebene Anzahl von Schweißausgängen von vornherein die maximale Anzahl von anschließbaren Schweißköpfen bzw. Schweißpistolen begrenzt. Nachträgliche Erweiterungen auf eine größere Anzahl von Schweißausgängen sind daher nicht möglich. In diesem Fall muss ein zusätzliches oder vollkommen neues Bolzenschweißgerät beschafft werden.

Aus der US-A-4804811 ist eine Bolzenschweißeinrichtung bekannt, bei der ein zentrales Bolzenschweißgerät mit mehreren externen Steuereinheiten verbunden ist, an welche jeweils eine Schweißpistole anschließbar ist. Zur Verbindung des zentralen Bolzenschweißgeräts mit den externen Steuereinheiten ist ein Multiplexer vorgesehen, über den der Steueranschluss des zentralen Bolzenschweißgeräts sternförmig mit jeweils einem Steueranschluss der externen Steuereinheiten verbunden ist. Der Schweißausgang des zentralen Bolzenschweißgeräts ist mit einem Schweißeingang einer ersten externen Steuereinheit verbunden, wobei weitere externe Steuereinheiten hinsichtlich der Schweißleitung kettenförmig mit der ersten externen Steuereinheit verbunden sind. Für das Auslösen eines Schweißvorgangs erzeugt das zentrale Bolzenschweißgerät über die Steuerleitung und den Multiplexer ein Schweißsignal, welches der betreffenden externen Steuereinheit zugeführt wird. Durch das Schweißsignal wird ein steuerbarer elektrischer Schalter angesteuert, der den Schweißausgang der Steuereinheit mit der betreffenden Schweißpistole verbindet. Nachträgliche Erweiterungen auf eine größere Anzahl von Schweißausgängen sind auch bei dieser Bolzenschweißeinrichtung nicht mehr möglich, sofern sämtliche Steuerausgänge des Multiplexers belegt sind.

Der Erfindung liegt daher die Aufgabe zugrunde, eine Bolzenschweißeinrichtung zu schaffen, welche hinsichtlich der durchzuführenden Bolzenschweißaufgaben und der Anzahl der anschließbaren Bolzenschweißpistolen bzw. Bolzenschweißköpfe eine verbesserte Flexibilität aufweist.

Die Erfindung löst diese Aufgabe mit den Merkmalen des Patentanspruchs 1.

Die Erfindung geht von der Erkenntnis aus, dass eine höhere Flexibilität dadurch erreichbar ist, dass ein zentrales Bolzenschweißgerät mit einem Schweißausgang und einem Steueranschluss verwendet wird, welches zumindest mit einer externen Steuereinheit verbunden wird. Durch die an die jeweils durchzuführenden Bolzenschweißaufgaben mögliche Anpassung der externen Steuereinheit muss bei einem Wechsel der Schweißaufgabe lediglich die externe Steuereinheit ersetzt werden. Das zentrale Bolzenschweißgerät, welches die Einheit für die Erzeugung des Schweißstroms beinhaltet, kann weiterhin verwendet werden. Die externe Steuereinheit wird zumindest über ein Schweißkabel und ein Steuerkabel mit dem zentralen Bolzenschweißgerät verbunden. Die Bolzenschweißpistole bzw. der Bolzenschweißkopf kann an den Schweißausgang der externen Steuereinheit angeschlossen werden. Diese beinhaltet zu diesem Zweck den steuerbaren Schalter, der so angesteuert wird, dass die vorgewählte Schweißzeit eingehalten wird.

An dieser Stelle sei bemerkt, dass im Folgenden der Begriff "Schweißkopf" stellvertretend verwendet wird sowohl für eine Schweißpistole zur manuellen Durchführung von Schweißvorgängen als auch für ortsfeste oder von Robotern in ihrer Bewegung gesteuerte Schweißköpfe für das automatische Durchführen von Schweißungen.

Durch die getrennte Ausbildung des zentralen Bolzenschweißgeräts und der zumindest einen externen Steuereinheit ergibt sich der Vorteil einer einfachen Anpassbarkeit an die durchzuführende Schweißaufgabe, da gegebenenfalls lediglich die externe Steuereinheit ausgetauscht werden muss.

Erfindungsgemäß werden mehrere externe Steuereinheiten kaskadiert und hierzu die Schweißeingänge der externen Steuereinheiten und die Steuereingänge bus- oder kettenförmig untereinander verbunden. Hierdurch ergibt sich der Vorteil eines wesentlich geringeren Verkabelungsaufwands im Vergleich zu einem zentralen Bolzenschweißgerät mit mehreren Schweißausgängen, wobei von jedem Bolzenschweißkopf ein separates Kabel zum Bolzenschweißgerät geführt werden muss.

Jede Steuereinheit weist eine Auswerte- und Steuereinrichtung auf, die im Wesentlichen selbständig vorbestimmte Aktionen bezüglich der Steuerung und/oder Auswertung eines Schweißablaufs steuert.

Nach der bevorzugten Ausführungsform der Erfindung ist die zumindest eine externe Steuereinheit getrennt vom zentralen Bolzenschweißgerät frei plazierbar. Hierdurch ergibt sich der Vorteil, dass das zentrale Bolzenschweißgerät bei Bedarf fest installiert werden kann und die externe Steuereinheit am Ort der durchzuführenden Schweißungen je nach Bedarf anordenbar ist.

Nach einer Ausführungsform der Erfindung ist die Auswerte- und Steuereinrichtung so ausgebildet, dass über den Steueranschluss eine Kommunikation mit dem zentralen Bolzenschweißgerät möglich ist.

Das Bolzenschweißgerät wird in diesem Fall vorzugsweise als Master und die externe Steuereinheit als Slave fungieren. Beispielsweise kann das zentrale Bolzenschweißgerät die Schweißparameter an die Auswerte- und Steuereinrichtung einer externen Steuereinheit übermitteln, wobei die externe Steuereinheit den eigentlichen Schweißablauf im Wesentlichen selbständig steuert. Hierzu steuert sie insbesondere den steuerbaren Schalter so an, dass die Schweißzeit eingehalten wird. Die Höhe des Schweißstroms wird vorzugsweise im zentralen Bolzenschweißgerät festgelegt, da die hierzu erforderlichen Baueinheiten einen entsprechenden Schaltungs- und Kostenaufwand bedingen.

Nach einer Ausführungsform der Erfindung kann eine externe Steuereinheit mit einer Einheit zur Steuerung der Achsbewegungen eines Bolzenschweißkopfs und/oder einer Steuereinheit für eine Sortiereinrichtung für das sortierte Zuführen von zu verschweißenden Teilen integriert ausgebildet sein. Hierdurch ergibt sich ein deutlich reduzierter Aufwand bei der Realisierung der einzelnen Steuereinrichtungen, da beispielsweise für die externe Steuereinheit bereits vorhandene Prozessorschaltungen mitverwendet werden können, die auch die Steuerung der Achsbewegung etc. durchführen.

Weitere Ausführungsformen der Erfindung ergeben sich aus den Unteransprüchen.

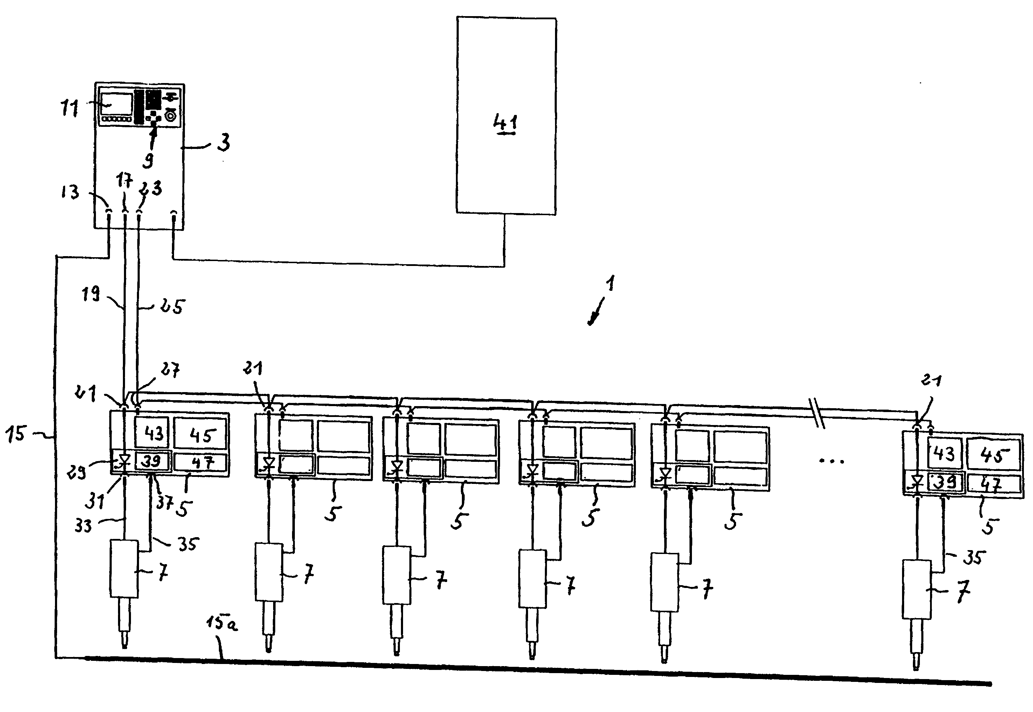

Die Erfindung wird nachfolgend anhand eines in der Zeichnung dargestellten Ausführungsbeispiels näher erläutert.

Die einzige Zeichnung zeigt eine schematische Darstellung einer Bolzenschweißeinrichtung nach der Erfindung mit einem zentralen Bolzenschweißgerät und mehreren externen Steuereinheiten zum Anschluss von Schweißköpfen.

Die in der Zeichnung dargestellte Bolzenschweißeinrichtung 1 umfasst ein zentrales Bolzenschweißgerät 3 und mehrere externe Steuereinheiten 5, an welche jeweils ein Bolzenschweißkopf 7 angeschlossen ist.

Das zentrale Bolzenschweißgerät 3 weist in üblicher Weise Eingabemittel 9 und eine Anzeigeeinheit 11 auf. Die Eingabemittel 9, beispielsweise in Form einer nummerischen Tastatur und Funktionstasten zur Menüsteuerung, dienen zur Eingabe von Schweißparametern und gegebenenfalls zu einer weitergehenden Programmierung bzw. Beeinflussung des zentralen Bolzenschweißgeräts 3. Die Anzeigeeinheit 11 ermöglicht die Darstellung von Schweißparametern, Schweißkurven, Schweißergebnissen und dergleichen. Das Schweißgerät weist einen Masseanschluss 13 auf, über den die einzelnen Werkstücke mittels einer Masseleitung 15 mit dem Massepotential verbindbar sind. Hierzu kann die Masseleitung 15 auch mit einer Masseschiene 15a verbunden sein, auf welcher die elektrisch leitenden Werkstücke aufgesetzt bzw. mit dieser verbunden werden.

Ein Schweißausgang 17 des zentralen Bolzenschweißgeräts 3 ist über eine Schweißleitung 19 mit dem Schweißeingang 21 einer ersten externen Steuereinheit 5 verbunden. Zusätzlich ist das zentrale Bolzenschweißgerät über einen Steueranschluss 23 und ein Steuerkabel 25 mit einem Steueranschluss 27 der ersten externen Steuereinheit 5 verbunden.

Die externe Steuereinheit 5 weist einen steuerbaren elektronischen Schalter 29, vorzugsweise in Form eines Thyristors, auf, welcher zwischen dem Schweißeingang 21 und einem Schweißausgang 31 der externen Steuereinheit 5 vorgesehen ist. Der Schweißausgang 31 der externen Steuereinheit 5 ist über ein weiteres Schweißkabel 33 mit dem Bolzenschweißkopf 7 verbunden. Zusätzlich ist der Bolzenschweißkopf 7 über ein Steuerkabel 35 mit einem Steueranschluss 37 der zentralen Steuereinheit 5 verbunden.

Die Steuereinheit 5 umfasst eine Auswerte- und Steuereinrichtung 39, welche im Wesentlichen selbständig die Steuerung eines Schweißablaufs übernehmen kann. Hierzu steuert die Auswerte- und Steuereinrichtung 39 über das Steuerkabel 35 in üblicher Weise die Aktoren und Sensoren (nicht dargestellt) des Bolzenschweißkopfs 7 an. Beispielsweise stellt die Auswerte- und Steuereinrichtung 39 das Aufsetzen des Schweißkopfs bzw. des zu verschweißenden Teils auf das Werkstück fest. Des Weiteren wird die Abhubbewegung bzw. Eintauchbewegung des Bolzens in der erforderlichen Weise gesteuert. Die Zufuhr des Schweißstroms wird von der Auswerte- und Steuereinrichtung 39 durch eine entsprechende Ansteuerung des steuerbaren Schalters 29 in der erforderlichen Weise beeinflusst.

Da die Mittel zur Erzeugung des Schweißstroms nach wie vor im zentralen Bolzenschweißgerät 3 vorgesehen sind, wird zumindest der maximal mögliche Schweißstrom durch das zentrale Bolzenschweißgerät bestimmt.

Durch eine geeignete Ansteuerung des steuerbaren Schalters 29, beispielsweise in Form einer Phasenanschnittssteuerung, oder durch das Vorsehen zusätzlicher Mittel zur gesteuerten Reduzierung des Schweißstroms in der externen Steuereinheit 5 kann der tatsächlich zum Bolzenschweißkopf 7 abgegebene Schweißstrom zwischen Null und dem maximalen Wert von der Auswerte- und Steuereinrichtung 39 bestimmt werden.

In einer anderen, nicht dargestellten Ausführungsform der Erfindung ist es selbstverständlich ebenfalls möglich, dass die Steuerung des Schweißstroms vom zentralen Bolzenschweißgerät vorgenommen wird, indem entsprechende Steuersignale über das Steuerkabel 25 an die externe Steuereinheit 5 übertragen werden, wobei diese dann keine Auswerte- und Steuereinrichtung 39 benötigt. Vielmehr können mittels der Steuersignale, die über das Steuerkabel 25 übertragen werden, die betreffenden Komponenten, wie der steuerbare Schalter 29 und die Aktoren und Sensoren des Bolzenschweißkopfs 7 unmittelbar mit dem zentralen Bolzenschweißgerät 3 verbunden und von diesem gesteuert werden.

In der dargestellten Ausführungsform fungiert jedoch das zentrale Bolzenschweißgerät 3 als übergeordneter Master und die externe Steuereinheit 5 als Slave. Die externe Steuereinheit 5 erhält die Schweißparameter und gegebenenfalls das Schweißprogramm vom zentralen Bolzenschweißgerät 3 und führt dann die Schweißvorgänge im Wesentlichen selbständig aus. Veranlasst werden die Schweißvorgänge jedoch auch in diesem Fall vorzugsweise durch einen Startbefehl, den das zentrale Bolzenschweißgerät 3 an die externe Steuereinheit 5 abgibt. Nach Empfang eines derartigen Startsignals führt die Steuereinheit 5 den Schweißvorgang im Wesentlichen selbständig aus. Messwerte, die die Steuereinheit 5 während des Schweißvorgangs oder nach dem Schweißvorgang aufnimmt, können dann von dieser ausgewertet und entsprechende Ergebnisse an das zentrale Bolzenschweißgerät 3 übertragen werden.

Das zentrale Bolzenschweißgerät 3 kann seinerseits mit einer übergeordneten Steuerung 41, beispielsweise einer Steuerung für eine gesamte Transferstraße, verbunden sein. Die übergeordnete Steuerung kann dem Bolzenschweißgerät 3 beispielsweise die Anzahl und den jeweiligen Zeitpunkt der durchzuführenden Schweißungen übermitteln. Gleichzeitig kann die Steuerung 41 beispielsweise eine statistische Auswertung der Schweißergebnisse anhand ihr übermittelter Ergebnisse vornehmen.

Der wesentliche Vorteil des Anordnens des steuerbaren Schalters 29 zur Beeinflussung des Schweißstroms besteht jedoch darin, dass, wie in der Figur dargestellt, eine praktisch beliebige Kaskadierung von mehreren externen Steuereinheiten 5 vorgenommen werden kann. Hierzu müssen lediglich die Schweißeingänge 21 der externen Steuereinheit 5 untereinander verbunden werden. Des Weiteren bietet es sich ebenfalls an, die Steueranschlüsse 27 der externen Steuereinheiten 5 untereinander, vorzugsweise mittels eines Bussystems oder in Form einer Kette (beispielsweise als Daisy-Chain) zu verbinden.

Auf diese Weise können, innerhalb sinnvoller Grenzen, praktisch eine beliebige Anzahl von externen Steuereinheiten und Bolzenschweißköpfen mit dem zentralen Bolzenschweißgerät 3 verbunden werden. Dies ermöglicht eine beliebige Erweiterbarkeit der Bolzenschweißeinrichtung 1, ohne dass bereits beim erstmaligen Erwerb einer Bolzenschweißeinrichtung die Anzahl der erforderlichen Schweißplätze bzw. Bolzenschweißköpfe festgelegt werden müsste.

Bei der Ansteuerung dieser kaskadierten externen Steuereinheiten muss das zentrale Bolzenschweißgerät 3 bzw. eine darin vorgesehene Steuereinheit selbstverständlich dafür Sorge tragen, dass zu einem bestimmten Zeitpunkt immer nur eine einzige externe Steuereinheit 5 zum Schweißen berechtigt ist. Dies kann auch in der Weise geschehen, dass eine externe Steuereinheit 5 ein Anforderungssignal an das zentrale Bolzenschweißgerät 3 abgibt und solange wartet, bis es die Berechtigung zur Durchführung eines Schweißvorgangs zugeteilt bekommt. Erst dann beginnt die Auswerte- und Steuereinrichtung 39 der externen Steuereinheit 5 mit dem Schweißvorgang.

Zur Beschleunigung der Schweißvorgänge kann selbstverständlich bereits eine Positionierung des Bolzenschweißkopfs erfolgen, so dass dann unmittelbar nach Erhalt der Schweißberechtigung der eigentliche Schweißvorgang durchgeführt werden kann.

Im dargestellten Ausführungsbeispiel ist die Auswerte- und Steuereinrichtung 39 und der steuerbare Schalter 29 bzw. die gesamte externe Steuereinheit integriert ausgebildet mit weiteren Steuereinheiten, beispielsweise einer Steuereinheit 43 zur Steuerung eines Sortierers bzw. des Zuführens von zu verschweißenden Teilen zum Bolzenschweißkopf und einer weiteren Steuereinheit 45, welche die Positionierung des Bolzenschweißkopfs relativ zum Werkstück übernimmt.

Hierdurch kann sich eine drastische Aufwandreduzierung ergeben, da die einzelnen Steuereinheiten 39, 43 und 45 beispielsweise in Form einer einzigen Mikroprozessorschaltung realisiert werden können.

Jede der kaskadierten Steuereinheiten 5 kann darüber hinaus eine Einheit 47 mit weiteren Bedien- und Anzeigeelementen aufweisen. Damit können erforderliche Eingaben zur Beeinflussung der einzelnen Steuereinrichtungen 39, 43 und 45 getätigt und Parameter, Schweißergebnisse, Fehlermeldungen und dergleichen angezeigt werden.

## Patentansprüche

1. Bolzenschweißeinrichtung mit
a) einem zentralen Bolzenschweißgerät (3) mit einem Schweißausgang (17) und einem Steueranschluss (23) und
b) mit mehreren externen Steuereinheiten (5), welche mit einem Schweißeingang (21) mit dem Schweißausgang (17) des zentralen Bolzenschweißgeräts (3) und einem Steueranschluss (27) mit einem Steueranschluss (23) des zentralen Bolzenschweißgeräts (3) verbunden ist und welche jeweils zumindest einen mit einem Bolzenschweißkopf (7) verbindbaren Schweißausgang (31) aufweist,
c) wobei jede externe Steuereinheit (5) zumindest einen steuerbaren Schalter (29) aufweist, welcher ansteuerbar den Schweißeingang (21) der Steuereinheit (5) mit einem Schweißausgang (31) verbindet,
**dadurch gekennzeichnet**,
d) dass die externen Steuereinheiten (5) kaskadierbar ausgebildet und kaskadiert verbunden sind, wobei hierzu die Schweißeingänge (21) der externen Steuereinheiten (5) und die Steuereingänge der externen Steuereinheiten (5) bus- oder kettenförmig verbunden sind, und
e) dass jede externe Steuereinheit (5) eine Auswerte- und Steuereinrichtung (39) aufweist, welche im Wesentlichen selbständig vorbestimmte Aktionen bezüglich der Steuerung und/oder Auswertung eines Schweißablaufs steuert.

2. Bolzenschweißeinrichtung nach Anspruch 1, **dadurch gekennzeichnet, dass** die zumindest eine externe Steuereinheit (5) getrennt vom zentralen Bolzenschweißgerät (3) plazierbar ist.

3. Bolzenschweißeinrichtung nach Anspruch 1 oder 2, **dadurch gekennzeichnet, dass** die Auswerte- und Steuereinrichtung (39) über den Steueranschluss (27) mit dem zentralen Bolzenschweißgerät (3) kommuniziert.

4. Bolzenschweißeinrichtung nach Anspruch 3, **dadurch gekennzeichnet, dass** das zentrale Bolzenschweißgerät (3) als Master und die externe Steuereinheit als Slave fungieren.

5. Bolzenschweißeinrichtung nach einem der vorhergehenden Ansprüche, **dadurch gekennzeichnet, dass** das zentrale Bolzenschweißgerät (3) der externen Steuereinheit (5) die Schweißparameter übermittelt und die externe Steuereinheit (5) im Wesentlichen selbständig den Schweißvorgang steuert

6. Bolzenschweißeinrichtung nach Anspruch 5, **dadurch gekennzeichnet, dass** die externe Steuereinheit (5) nach Ablauf jedes Schweißvorgangs oder nach einer vorbestimmten Anzahl von Schweißvorgängen, nach einer vorbestimmten Zeitspanne oder auf Anforderung Daten über den oder die durchgeführten Schweißvorgänge an das zentrale Bolzenschweißgerät (3) übermittelt.

7. Bolzenschweißeinrichtung nach einem der vorhergehenden Ansprüche, **dadurch gekennzeichnet, dass** die externe Steuereinheit (5) mit einer Einheit (45) zur Steuerung der Achsbewegungen eines Bolzenschweißkopfs (7) und/oder einer Steuereinheit (43) für eine Sortiereinrichtung für das Sortieren und Zuführen von zu verschweißenden Teilen integriert ausgebildet ist.

## Claims

1. Stud welding device comprising
a) a central stud welding appliance (3) having a welding output (17) and a control connection (23) and
b) comprising a plurality of external control units (5) connected by a welding input (21) to the welding output (17) of the central stud welding appliance (3) and by a control connection (27) to a control connection (23) of the central stud welding appliance (3) and comprising in each case at least one welding output (31) connectable to a stud welding head (7),
c) wherein each external control unit (5) comprises at least one controllable switch (29), which selectably connects the welding input (21) of the control unit (5) to a welding output (31),
**characterized in**
d) that the external control units (5) are of a cascadable design and are cascade-connected, wherein for said purpose the welding inputs (21) of the external control units (5) and the control inputs of the external control units (5) are connected in the form of a bus or chain, and
e) that each external control unit (5) comprises an evaluation and control device (39), which controls substantially independently predetermined actions with regard to the control and/or evaluation of a welding sequence.

2. Stud welding device according to claim 1, **characterized in that** the at least one external control unit (5) is positionable separately from the central stud welding appliance (3).

3. Stud welding device according to claim 1 or 2, **characterized in that** the evaluation and control device (39) communicates via the control connection (27) with the central stud welding appliance (3).

4. Stud welding device according to claim 3, **characterized in that** the central stud welding appliance (3) functions as a master and the external control unit functions as a slave.

5. Stud welding device according to one of the preceding claims, **characterized in that** the central stud welding appliance (3) transfers the welding parameters-to the external control unit (5) and the external control unit (5) controls the welding operation substantially independently.

6. Stud welding device according to claim 5, **characterized in that** the external control unit (5) at the end of each welding operation or after a predetermined number of welding operations, after a' predetermined length of time or on request transfers data relating to the completed welding operation(s) to the central stud welding appliance (3).

7. Stud welding device according to one of the preceding claims, **characterized in that** the external control unit (5) is integrated with a unit (45) for controlling the axial movements of a stud welding head (7) and/or with a control unit (43) for a sorting device for sorting and supplying parts, which are to be welded together.

## Revendications

1. Dispositif de soudage de goujons comprenant :
a) un appareil de soudage de goujons central (3) avec une sortie de soudage (17) et une borne de commande (23), et
b) plusieurs unités de commande externes (5), ledit appareil étant connecté par une entrée de soudage (21) à la sortie de soudage (17) de l'appareil de soudage de goujons central (3) et par une borne de commande (27) à une borne de commande (23) de l'appareil de soudage de goujons central (3) et présentant respectivement au moins une sortie de soudage (31) qui peut être connectée à une tête de soudage de goujons (7),
c) chaque unité de commande externe (5) présentant au moins un commutateur commandé (29), qui connecte l'entrée de soudage (21) de l'unité de commande (5) à une sortie de soudage (31) par commande,
**caractérisé en ce que**
d) les unités de commande externes (5) sont conformées en cascade et sont connectées en cascade, les entrées de soudage (21) des unités de commande externes (5) et les entrées de commande des unités de commande externes (5) connectées en forme de bus ou de chaîne à cette fin, et
e) chaque unité de commande externe (5) présente un dispositif d'exploitation et de commande (39), qui commande des actions prédéterminées de manière sensiblement autonome par rapport à la commande et/ou à l'exploitation d'une opération de soudage.

2. Dispositif de soudage de goujons selon la revendication 1, **caractérisé en ce que** la au moins une unité de commande externe (5) peut être mise en place séparément de l'appareil de soudage de goujons central (3).

3. Dispositif de soudage de goujons selon la revendication 1 ou 2,
**caractérisé en ce que** le dispositif d'exploitation et de commande (39) est en communication avec l'appareil de soudage de goujons central (3) via la borne de commande (27).

4. Dispositif de soudage de goujons selon la revendication 3, **caractérisé en ce que** l'appareil de soudage de goujons central (3) opère en maître et l'unité de commande externe en esclave.

5. Dispositif de soudage de goujons selon l'une quelconque des revendications précédentes, **caractérisé en ce que** l'appareil de soudage de goujons central (3) de l'unité de commande externe (5) transfère les paramètres de soudage et l'unité de commande externe (5) commande l'opération de soudage de manière sensiblement autonome.

6. Dispositif de soudage de goujons selon la revendication 5, **caractérisé en ce que** l'unité de commande externe (5) transfère à l'appareil de soudage de goujons central (3) des données sur la ou les opérations de soudage effectuées après déroulement de chaque opération de soudage ou après un nombre prédéterminé d'opérations de soudage, après une période de temps prédéterminée ou sur demande.

7. Dispositif de soudage de goujons selon l'une quelconque des revendications précédentes, **caractérisé en ce que** l'unité de commande externe (5) est intégrée avec une unité (45) pour commander les déplacements axiaux d'une tête de soudage de goujons (7) et/ou une unité de commande (43) pour un dispositif de triage pour le triage et l'acheminement de pièces à souder.
